# DEMANDE DE BREVET EUROPEEN

(11) **EP 1 873 854 A2**
(43) Date de publication de la demande: **02.01.2008**
(21) Numéro de dépôt: 07111226.2
(22) Date de dépôt: 28.06.2007
(51) Int. Cl.: H01M 8/02, H01M 4/86

(54) **Structure de cellule elementaire pour pile à combustion equipée de moyens d etancheité**

(30) Priorité: 30.06.2006 FR 0652745
(71) Demandeur: HELION, 13545 Aix en Provence Cedex 04 (FR)
(72) Inventeur: Nietsch, Thomas, 13290, LES MILLES (FR); Chaudron, Valéry, 04100, MANOSQUE (FR); Tchicaya-Bouckary, Lydie, 13510, EGUILLES (FR); Verdu, Olivier, 13100, AIX EN PROVENCE (FR)

(57) **Abrégé**

L'invention permet d'assurer l'étanchéité au niveau du contact entre chaque élément membrane-électrodes (1) avec les plaques d'alimentation (10).

Il est prévu, en regard, de la surface débouchante du canal de réfrigération (15) de chaque plaque d'alimentation (10) de disposer dans les couches de diffusion (3B, 4B) respectivement de l'anode (3) et de la cathode (4), de moyens d'étanchéité réalisés, soit au moyen d'une couche de densification (20), soit en utilisant un matériau microporeux pour constituer les couches de diffusion (3B, 4B).

Application aux piles à combustible du type PEM.

## Description

### DOMAINE DE L'INVENTION

La problématique actuelle de développement durable et l'épuisement annoncé des ressources de combustibles fossiles impliquent un besoin sans cesse croissant de sources d'énergie si possible renouvelables et à haut rendement.

En conséquence, l'invention concerne le domaine des piles à combustible dont les applications industrielles peuvent être aussi bien civiles que militaires, et concerner aussi bien des installations fixes que divers moyens de transport.

Les applications fixes ou stationnaires concernent, par exemple, les hôpitaux et autres bâtiments de service pour lesquels l'éventualité d'une interruption d'alimentation électrique doit être exclue. Les applications relatives au transport concernent la propulsion des camions, des trains, de sous-marins, et des véhicules urbains de transport en commun, tels que les autobus et les tramways.

### ART ANTERIEUR ET PROBLEME POSE

La pile à combustible est un dispositif électrochimique qui convertit directement l'énergie chimique d'un combustible en énergie électrique. Le principe de fonctionnement de ce générateur électrochimique repose sur la réaction de synthèse électrochimique de l'eau. De nombreuses piles à combustible sont constituées d'une succession d'étages élémentaires appelés également cellules électrochimiques, comprenant chacun un élément de base constitué de deux électrodes, une anode et une cathode, auxquelles sont apportés continûment un comburant, par exemple de l'air ou de l'oxygène, et un combustible, par exemple de l'hydrogène, ces deux éléments gazeux restant séparés par une membrane échangeuse d'ions faisant office d'électrolyte. A l'anode, le combustible subit une oxydation catalytique libérant protons et électrons, dans le cas d'une pile à combustible du type à membrane échangeuse de protons. Les électrons produits circulent le long du circuit électrique extérieur, alors que les protons sont transportés de l'électrolyte vers la cathode, où ils se recombinent avec les électrons et l'oxygène. Cette réduction cathodique s'accompagne d'une production d'eau et d'un établissement d'une différence de potentiel entre les deux électrodes.

Plusieurs types de piles à combustible coexistent et se différencient par la nature de leur électrolyte et leurs températures de fonctionnement. Concernant les piles à combustible fonctionnant à basses températures (températures inférieures à 100°C), la technologie la plus avancée est représentée par les piles à combustible à électrolyte polymère. L'invention développée ici utilise une pile à combustible de type PEM (« Proton Exchange Membrane » en anglais) dont l'électrolyte polymère est une membrane échangeuse de protons.

Le coeur d'une pile à combustible est constitué d'un assemblage de cellules électrochimiques élémentaires, empilées les unes sur les autres en un nombre suffisant, afin d'obtenir les valeurs de tension et courant souhaitées. Un tel empilement de cellules élémentaires d'un coeur de pile à combustible est couramment désigné par le terme « stack ».

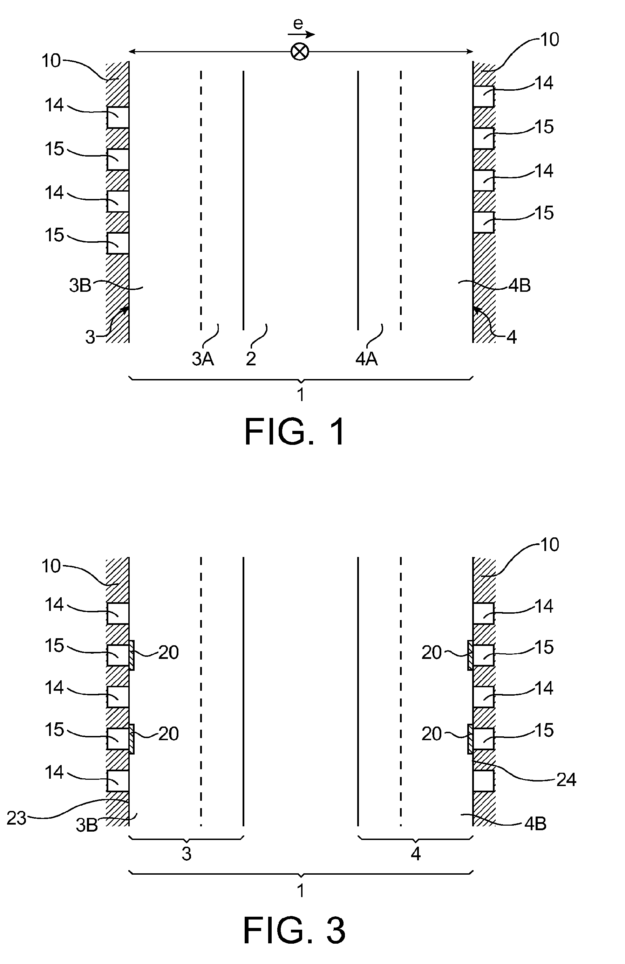

En référence à la figure 1, chaque cellule élémentaire d'une pile à combustible de type PEM se compose de deux plaques séparatrices 10 assurant l'apport des gaz réactifs, c'est-à-dire le combustible et le comburant, disposées de part et d'autre d'un ensemble membrane-électrodes 1 appelé « EME ». Cet ensemble membrane-électrode 1 comprend une membrane échangeuse protonique 2 et deux électrodes catalytiques à diffusion de gaz, à savoir une anode 3 et une cathode 4, constituées chacune d'une couche active 3A, 4A et d'une couche de diffusion 3B, 4B. A l'anode 3, après diffusion au travers de la couche de diffusion 3B, l'hydrogène, qui compose un des deux gaz réactifs, est oxydé catalytiquement dans la couche active 3A, pour donner des protons et des électrons. Les électrons empruntent un circuit électrique extérieur de l'anode 3 vers la cathode 4 schématisé par le haut de la figure 1, mais aussi les éléments effectuant la séparation des gaz réactants. A la cathode 4, l'oxygène, l'autre gaz réactif, subit une réduction catalytique et se recombine avec les protons et les électrons pour donner de l'eau.

Dans un empilement de cellules élémentaires d'une pile à combustible du type PEM, les plaques séparatrices 10, appelées plaques polaires ou bipolaires, assurent également la fonction de distribution des gaz réactifs, à savoir l'oxygène ou l'air, et l'hydrogène, la fonction de collectage des électrons produits et celle d'évacuation des produits de la réaction, dont l'eau. Chaque plaque séparatrice 10 est en contact avec une de ses faces avec l'anode 3 d'une cellule élémentaire de rang N, tandis que sur l'autre face, elle est contact avec une cathode 4 d'une cellule élémentaire de rang N+1.

Les gaz réactifs circulent donc sur les deux surfaces de chaque plaque séparatrice 10, au moyen de canaux de circulation des gaz réactifs 14.

En outre, dans les piles à combustible de grande puissance, une dernière fonction des plaques séparatrices 10, c'est-à-dire polaires ou bipolaires, est la réfrigération de l'empilement des cellules élémentaires, au moyen d'une circulation d'un liquide réfrigérant entre les différentes cellules élémentaires de la pile à combustible. Le fluide réfrigérant circule dans des canaux de réfrigération 15, spécifiquement conçus et intégrés dans les plaques séparatrices 10. Il est à noter que, à ce stade, le liquide de refroidissement couramment utilisé est de l'eau.

Les canaux de réfrigération 15, où circule le fluide réfrigérant, sont classiquement intégrés dans des plaques spécifiques disposées dans l'empilement et dédiés à la seule distribution du fluide réfrigérant. Dans des cas précédents, les distributions des gaz réactifs et du fluide réfrigérant ne sont pas réalisées dans un même plan ni sur une même plaque. Cependant, l'insertion de cellules de réfrigération spécifiques entre plusieurs cellules électrochimiques de base augmente le volume final de l'empilement, ce qui constitue un inconvénient majeur pour des applications de type transport, par exemple, pour lesquelles l'optimisation de l'espace est souhaitée.

Afin de réduire le volume de l'empilement de cellules de base, et comme le décrit la demande de brevet français FR 2 863 780, il est possible d'utiliser des plaques séparatrices 10 pour lesquelles le ou les canaux de réfrigération 15 se trouvent sur la ou les mêmes faces que celle(s) où se trouvent les canaux de circulation des gaz réactifs 14. Ainsi, ces derniers et les canaux de réfrigération 15 sont coplanaires. De plus, le ou les canaux de réfrigération 15 se situent sur une ou deux des faces de la plaque séparatrice 10.

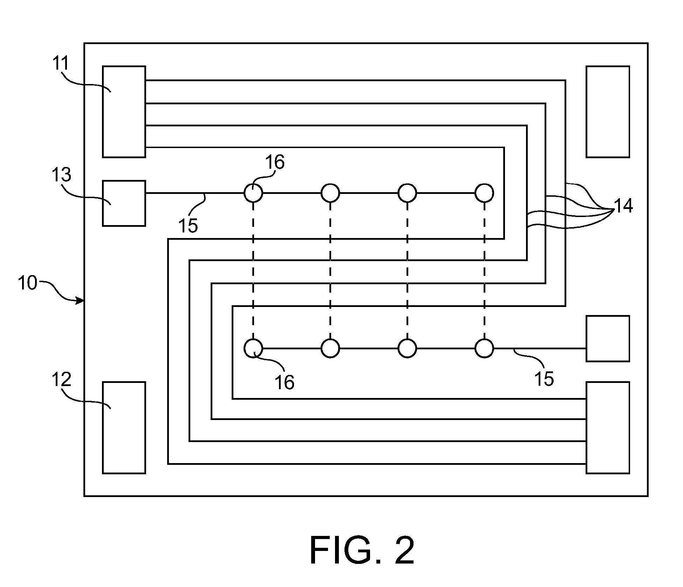

En référence à la figure 2, dans le cas où la réfrigération a lieu sur les deux faces de la même plaque séparatrice 10, il est possible qu'un seul canal de réfrigération 15 assure la réfrigération simultanément sur les deux faces de la plaque séparatrice 10, grâce à des passages de traversée 16 de la plaque d'une face à l'autre. La plaque séparatrice 10 comprend alors plusieurs trous de traversée 16 du canal de refroidissement 15. On note, à la périphérie de la plaque séparatrice 10 des trous d'alimentation 11 et 12 en gaz réactifs et des trous d'alimentation et d'évacuation du réfrigérant 13.

Se pose alors le problème de l'étanchéité des gaz réactifs vis-à-vis du liquide de réfrigération au travers des couches de diffusion référencées respectivement 3B et 4B sur l'anode 3 et la cathode 4 de la figure 1. Le problème se pose, dans une moindre mesure, de part et d'autre de la plaque séparatrice 10, à cause du perçage de cette dernière pour obtenir les passages de traversée 16. Enfin, se pose également le problème de l'étanchéité d'un gaz réactif par rapport à l'autre de part et d'autre de la plaque séparatrice 10.

Le but de l'invention est donc de remédier à cet inconvénient en restaurant la fonction de séparation des gaz réactifs, au niveau de la plaque séparatrice 10 et d'assurer une séparation des gaz réactifs par rapport à l'eau au niveau des couches de diffusion 3B et 4B de l'anode 3 et de la cathode 4 de chaque cellule de base.

### RESUME DE L'INVENTION

A cet effet, l'objet principal de l'invention est une structure de cellule élémentaire de pile à combustible comprenant :
- un ensemble membrane/électrodes avec des surfaces planes de contact, sur ses deux couches de diffusion, et
- une plaque séparatrice dont au moins une surface de circulation des canaux coplanaires de distribution des gaz réactifs et du liquide réfrigérant est en contact avec au moins une surface plane de contact de l'ensemble membrane-électrodes adjacent, et
- des moyens d'étanchéité entre les canaux de circulation des gaz réactifs et le au moins un canal de réfrigération.

Selon l'invention, les moyens d'étanchéité sont au moins superficiels et se trouvent au moins au niveau de la surface de chaque couche de diffusion constituant la surface de contact, en contact avec la surface de circulation de la plaque séparatrice, en regard du ou des canaux de réfrigération.

Une première réalisation de l'invention consiste à effectuer une densification de la couche superficielle de chaque surface de contact de l'ensemble membrane-électrodes, soit en surface, soit sur une certaine épaisseur.

Cette densification peut être effectuée au moyen d'un adhésif, par exemple au moyen d'une colle, ou d'une plaque fine.

Une deuxième réalisation consiste à réaliser la couche de densification au moyen d'un matériau hydrophobe inoculé dans la couche de diffusion sur une certaine épaisseur.

Enfin, une troisième réalisation de l'invention consiste à utiliser un matériau microporeux pour constituer les deux couches de diffusion constituant chacune une surface de contact avec l'ensemble membrane-électrodes.

### BRÈVE DESCRIPTION DES DESSINS

L'invention et ses différentes caractéristiques techniques seront mieux comprises à la lecture de la description suivante, accompagnée de trois figures représentant respectivement :
- figure 1, une coupe partielle de la structure d'une cellule de base de pile à combustible selon l'art antérieur ;
- figure 2, le schéma global d'une surface de distribution d'une plaque séparatrice selon une réalisation de l'art antérieur dans laquelle les canaux de réfrigération et de distribution des gaz réactifs sont coplanaires, et
- figure 3, en coupe, la structure de la cellule élémentaire selon l'invention.

### DESCRIPTION DÉTAILLÉE DE TROIS RÉALISATIONS DE L'INVENTION

En référence à la figure 3, chaque cellule élémentaire est équipée du moyen d'étanchéité pour chaque élément membrane-électrodes 1, en particulier au niveau des couches de diffusion 3B et 4B des électrodes, respectivement l'anode 3 et la cathode 4 de chaque cellule élémentaire. L'objectif est d'éviter que le liquide de refroidissement, par exemple de l'eau, ne se mélange avec un ou les deux gaz réactifs, par exemple l'oxygène et l'hydrogène, ou que ces deux gaz réactifs ne se mélangent entre eux.

On rappelle que ces moyens d'étanchéité s'appliquent à des plaques d'alimentation 10 pour lesquelles un canal de réfrigération 15 est utilisé, ce canal de réfrigération 15 traversant la plaque de distribution 10, mais aussi à des plaques d'alimentation comportant chacune au moins un canal de réfrigération 15 sur chacune des surfaces de distribution.

Comme le montre la figure 3, les canaux d'alimentation en gaz réactifs 14 et de réfrigération 15 sont coplanaires et débouchent dans un même plan qui est le plan de contact entre chaque plaque d'alimentation 10 et la surface plane de contact 23 de l'anode 3 et la surface de contact 24 de la cathode 4. Il y a donc lieu de penser que sans moyen d'étanchéité, une partie des gaz réactifs circulant dans le ou les canaux de circulation des gaz réactifs 14 puissent passer dans ce plan de contact pour aboutir dans le canal de réfrigération 15.

La solution proposée consiste à installer des moyens d'étanchéité au niveau de la surface ou sur une certaine épaisseur de la couche de diffusion 3B de l'anode 3 et de la couche de diffusion 4B de la cathode 4, en regard du canal et de réfrigération 15. En effet, dans deux réalisations de l'invention, face à chaque section du canal de réfrigération 15, une couche de densification 20 est représentée, d'une largeur supérieure ou non à celle de la section du canal de réfrigération 15 et débordant ou non de chaque côté. On comprend, ainsi, que, si cette couche de densification 20 est imperméable ou présente des propriétés équivalentes vis-à-vis des liquides ou des gaz réactifs, l'étanchéité du liquide de réfrigération, par exemple l'eau, est assurée vis-à-vis des canaux de circulation des gaz réactifs 14.

Une telle couche de densification 20 peut être réalisée de différentes manières, par exemple au moyen d'un adhésif placé sur les surfaces respectivement 23 et 24 des couches de diffusion 3B et 4B de l'anode 3 et de la cathode 4. Bien entendu, cet adhésif doit être placé en regard du canal de réfrigération 15, comme le montrent les couches d'étanchéité 20 sur la figure 3. On note que le matériau adhésif peut être réalisé sous la forme, soit d'une colle, soit d'un film, soit d'une plaque fine. Une deuxième solution consiste à réaliser la couche de densification 20 au moyen d'un matériau hydrophobe, placé plus exactement sur la couche superficielle 23 de la couche de diffusion 3B de l'anode 3 et sur la couche superficielle 24 de la couche de diffusion 4B de la cathode 4. Un tel matériau hydrophobe peut être du polyfluorure de vinylidène (PVDF).

La troisième façon proposée de réaliser les moyens d'étanchéité selon l'invention consiste à imbiber chaque couche de diffusion de matériau microporeux, de manière à recouvrir, entre autres, toute la surface débouchante du canal de réfrigération 15. Une telle couche de diffusion de matériau microporeux est alors formée d'une multitude de micropores dont le faible diamètre, de l'ordre du micron, permettant le passage des particules de gaz mais bloquant le passage des gouttes de liquide.

On note que ces moyens d'étanchéité au niveau du canal de réfrigération 15 sont indépendants des autres matériaux et joints d'étanchéité utilisés dans le cadre de l'empilement de cellules de base d'une pile à combustible. On pense en particulier aux joints externes toujours présents sur les plaques d'alimentation non représentés sur les figures de la présente demande de brevet.

## Revendications

1. Structure de cellule élémentaire d'une pile à combustible comprenant :
- un ensemble membrane-électrodes (1) avec deux surfaces planes de contact (23, 24) sur ses deux couches de diffusion (3B, 4B),
- une plaque d'alimentation (10) placée de chaque côté de l'ensemble membrane-électrodes (1) et ayant une surface de distribution comportant des canaux de circulation des gaz réactifs (14) et au moins un canal de réfrigération (15) étant en contact avec la surface de contact (23, 24) de l'ensemble membrane-électrodes (1), et
- des moyens d'étanchéité entre les canaux de circulation des gaz réactifs (14) et le au moins un canal de réfrigération,
**caractérisée en ce que** les moyens d'étanchéité sont au moins superficiels et se trouvent au niveau de la surface de la couche de diffusion (3B) de l'anode (3) et de la couche de diffusion (4B) de la cathode (4) de l'ensemble membrane-électrodes (1), au moins en regard du canal de réfrigération (15) de chaque plaque d'alimentation (10).

2. Structure selon la revendication 1, **caractérisée en ce que** les moyens d'étanchéité sont constitués par une couche de densification (20) placée en regard du canal de réfrigération (15), sur une certaine épaisseur de la surface de la couche de diffusion (3B) de l'anode (3), et de la couche de diffusion (4B) de la cathode (4).

3. Structure selon la revendication 2, **caractérisée en ce que** la couche de densification (20) est réalisée au moyen d'un adhésif.

4. Structure selon la revendication 3, **caractérisée en ce que** l'adhésif de la couche de densification (20) est réalisé au moyen d'une colle.

5. Structure selon la revendication 3, **caractérisée en ce que** l'adhésif de la couche de densification (20) est réalisée au moyen d'une plaque fine.

6. Structure selon la revendication 1, **caractérisée en ce que** les moyens d'étanchéité sont constitués par une couche de densification (20) placée en regard du canal de réfrigération (15), sur une certaine épaisseur de la couche de diffusion (3B) de l'anode (3), et de la couche de diffusion (4B) de la cathode (4).

7. Structure selon la revendication 6, **caractérisée en ce que** la couche de densification (20) est réalisée au moyen d'un matériau hydrophobe.

8. Structure selon la revendication 1, **caractérisée en ce que** les moyens d'étanchéité sont réalisés au moyen d'un matériau microporeux constituant la couche de diffusion (3B) de l'anode (3) et la couche de diffusion (4B) de la cathode (4).
